Europäisches Patentamt

European Patent Office

Office européen des brevets

(19)

(11) Veröffentlichungsnummer: **0 310 773 B1**

(12) **EUROPÄISCHE PATENTSCHRIFT**

(45) Veröffentlichungstag der Patentschrift: 27.11.91

(51) Int. Cl.⁵: **F16L 23/00**, F16L 25/02

(21) Anmeldenummer: 88112040.6

(22) Anmeldetag: 26.07.88

(54) **Durchschlagfeste Verbindung unterschiedlicher Gummierungsqualitäten im Flanschbereich.**

(30) Priorität: 08.10.87 AT 2619/87

(43) Veröffentlichungstag der Anmeldung:
12.04.89 Patentblatt 89/15

(45) Bekanntmachung des Hinweises auf die
Patenterteilung:
27.11.91 Patentblatt 91/48

(84) Benannte Vertragsstaaten:
CH DE GB IT LI

(56) Entgegenhaltungen:
DE-A- 2 828 076

(73) Patentinhaber: Auzinger, Johann

A-4724 Neukirchen am Walde No. 56(AT)

(72) Erfinder: Samhaber, Friedrick, Dr. Dipl.-Ing.
Schieferhub 5
A-4722 Peuerbach(AT)

(74) Vertreter: Köhler-Pavlik, Johann, Dipl.-Ing. et
al
Margaretenplatz 5
A-1050 Wien(AT)

EP 0 310 773 B1

## Beschreibung

Diese Erfindung betrifft ein Isolierstück für Verbindungsstellen zwischen Flanschen, insbesondere Rohrflanschen.

Im Flanschbereich von Stutzen und Rohren, welche mit Weichgummi ausgekleidet sind, ergibt sich häufig die Notwendigkeit, eine Verbindung zwischen Weich- und Hartgummi herzustellen, wenn die Dichtfläche des Flansches vorwiegend mit Hartgummi ausgekleidet werden soll.

Diese Verbindungsstelle ist leicht herzustellen und unproblematisch, wenn Gummiqualitäten derselben Art - z.B. Naturkautschuk-Weichgummi und Naturkautschuk-Hartgummi - miteinander verbunden werden sollen.

Sollen jedoch Gummiqualitäten unterschiedlicher Art, z.B. Synthesekautschuk- Weichgummi und Naturkautschuk-Hartgummi, miteinander verbunden werden, so treten große Schwierigkeiten auf, die häufig mit vertretbarem Aufwand nicht gelöst bzw. überwunden werden können. Da die im Flanschbereich zur Verfügung stehende Klebefläche (üblicherweise die Schurfstelle) sehr gering ist und eine homogene Verbindung zwischen Kautschukarten unterschiedlicher Natur kaum bzw. nicht möglich ist, ist diese in der üblichen Technik hergestellte Verbindung eine neuralgische Stelle, die kaum absolut dicht ist und daher bei der Funkeninduktionsprüfung Durchschläge zeigt.

In der CH-A-5375 sind Flanschdichtungen aus dünnen Dichtringen, die mit federnden Metallringen getrennt sind, beschrieben. Die Dichtringe liegen in einer Ebene. Diese Dichtung ist infolge der Metallringeinlage bei der Funkeninduktionsprüfung nicht durchschlagfest.

Ferner ist in der FR-A-24 01 761 eine Flanschdichtung im Flanschbereich eines PVC-Rohres angeordnet. Im Flanschbereich befinden sich Verstärkungsschichten, die durch eine S-förmige Zwischenlage getrennt sind. Die S-förmige Zwischenlage und die Verstärkungsschichten dienen zum Abstützen des Flansches. Die Flanschdichtung ist mit dem Rohr zusammengeschweißt, so daß diese bei einer Funkeninduktionsprüfung nicht durchschlagfest ist.

Diese Erfindung hat sich zur Aufgabe gemacht, ein derartiges Isolierstück für eine durchschlagfeste Verbindung zu schaffen, wobei auf einfache Weise unterschiedliche Gummierungsqualitäten verbunden werden können.

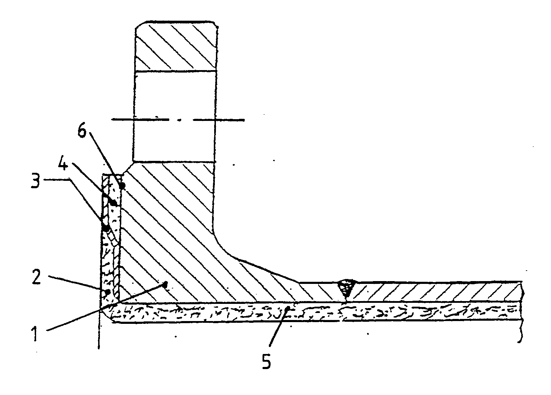

Die Erfindung ist in den Ansprüchen 1 bis 6 gekennzeichnet und in der folgenden Beschreibung und in der Zeichnung sind weitere Ausbildungen beschrieben.

Nach der Erfindung werden unterschiedliche Gummierungsqualitäten im Flanschbereich mit einer zwischen einer Weichgummischicht und einer Hartgummischicht eingelegten, doppelt abgewinkelten bzw. S-förmigen Hartgummizwischenlage, die zum Teil unter der Weichgummischicht und zum Teil über der Hartgummischicht verläuft, verbunden.

Diese Verbindung wird insbesondere so hergestellt, daß zuerst die Hartgummischicht im unvulkanisierten Zustand auf den Rohrflansch aufgeklebt, und mit schrägem Schurf versehen wird; danach wird eine Hartgummizwischenlage im unvulkanisierten Zustand über die Hartgummischicht und die gesamte zu gummierende Flanschfläche, insbesondere die Stirnfläche 6 des Rohres, aufgeklebt; sodann wird eine Weichgummischicht, vorzugsweise aus der Rohrgummierung 5, über die Schurfstelle gezogen und aufgeklebt, worauf die nicht vulkanisierten Gummiteile in an sich bekannter Weise ausvulkanisiert werden.

In der Zeichnung ist ein Beispiel eines Isolierstückes mit unterschiedlichen Gummierungsqualitäten im Flanschbereich im Querschnitt dargestellt.

Auf dem Rohrflansch 1 ist die Hartgummischicht 4 in Form eines Ringes angebracht. Die Hartgummiplatte 4 ist geschürft (abgeschrägt). Die Hartgummizwischenlage 3 deckt die Hartgummischicht 4 und den restlichen Rohrflansch 1 ab.

Über einen Teil, und zwar bis zur Schurfstelle der Hartgummizwischenlage 3, ist der Weichgummi aus der Rohrauskleidung darübergezogen und bildet somit die Weichgummischicht 2.

Die Hartgummizwischenlage 3 bildet im aufgeklebten, ausvulkanisierten Zustand eine S-Form bzw. eine doppelt abgewinkelte Form.

Beispiel 1:

Die zu gummierende Flanschstirnfläche 6 eines Rohrflansches 1 aus Stahl wird bis zu einer Oberflächengüte SA 2 1/2 nach DIN 55928 und einer Rauhtiefe von 30-40 µm sandgestrahlt und anschließend durch Abkehren sorgfältig gereinigt. Der Flanschteil, auf welchen die ringförmige Hartgummischicht 4 aufgesetzt wird, wird mit einer Gummilösung eingestrichen und das Lösungsmittel wird abgelüftet. Eine unvulkanisierte Hartgummischicht 4 von 3 mm Stärke aus Naturkautschuk wird ebenfalls mit einer Gummilösung gestrichen und nach dem Ablüften auf die vorbereitete Stirnfläche geklebt und angerollt. An der vorgesehenen Schnittstelle wird der unvulkanisierte Hartgummi sodann mit schrägem Schurf (Schürfwinkel ca. 45°) abgeschnitten und überschüssiger Gummi wird entfernt.

Die Hartgummischicht 4 wird sodann mit Benzin bestrichen und abgelüftet. Eine 2 mm starke Platte aus unvulkanisiertem Naturkautschuk in Hartgummiqualität wird auf einer Seite mit Benzin eingestrichen und abgelüftet. Die so vorbereitete 2 mm Gummiplatte wird nun als Zwischenlage 3 auf die gesamte zu gummierende Flanschfläche - wie in der Zeichnung dargestellt - aufgeklebt und angerollt. Überstehende Gummiteile werden an der Rohrinnenkante und der Dichtflächenaußenkante scharf abgeschnitten. Die Rohrinnenseite wird mit einer Lösung von 15% Chlorkautschuk, 40% Xylol und 45% Toluol geflutet, die noch zu gummierende Hartgummifläche wird mit einer Lösung von

12,5 Gew.% Chloroprenkautschukmischung

12,5 Gew.% Naturkautschukmischung

25,0 Gew.% Butanon

25,0 Gew.% Benzin

25,0 Gew.% Azeton

gestrichen und abgelüftet.

Der für die Rohrgummierung verwendete Schlauch, d.h. die Rohrauskleidung aus 5 mm starkem Chloroprenkautschuk wird nun auf der Außenseite mit einer Lösung von

25,0 Gew.% Chloroprenkautschuk

25,0 Gew.% Butanon

25,0 Gew.% Benzin

25,0 Gew.% Azeton

eingestrichen, abgelüftet, in das Rohr eingezogen, mit Preßluft an die Rohrwand angepreßt und durch Durchziehen eines zylindrischen Molches fest angedrückt. Die an den Rohrenden überstehenden Schlauchteile werden über die Hartgummierung der Flanschinnenseite und über die Schurfstelle gezogen und angebügelt und bilden somit die Weiohgummischicht 2.

Das derart gummierte Rohr wird in Autoklaven 5 Stunden bei 130° C geheizt und damit ausvulkanisiert. Nach dem Erkalten wird die Flanschfläche plan geschliffen und die gesamte Gummierung auf Dichtheit überprüft.

Beispiel 2:

Es wird wie in Beispiel 1 beschrieben gearbeitet, jedoch Hart- und Weichgummierung gesondert im Autoklaven vulkanisiert. Dazu wird wie in Beispiel 1 beschrieben, zuerst die Naturkautschukhartgummierung bei 130° C 5 Stunden lang vulkanisiert und sodann ausgekühlt. Im zweiten Arbeitsgang werden nun die Hartgummiflächen - welche mit Weichgummi überzogen werden soll - und die Schurfstelle durch Sandstrahlen aufgerauht und die Rohrinnenseite ebenfalls sandgestrahlt. Die aufgerauhten Hartgummipartien werden mit Tetrahydrofuran gewaschen und wie im Beispiel 1 beschrieben weiterbehandelt. Nach Fertigstellung der rohen Weichgummierung wird das Rohr ein zweites Mal im Autoklaven geheizt, diesmal 2 Stunden bei 120° C. Nach dem Abkühlen wird das Rohr wie im Beispiel 1 beschrieben - weiterbehandelt.

Beispiel 3.

Es wird wie im Beispiel 1 beschrieben gearbeitet, jedoch anstelle von Chloropren ein Acryl-Nitril-Butadien-Kautschuk (Nitrilkautschuk) verwendet und so Verbindungsstellen zwischen Naturkautschuk und Nitrilkautschuk hergestellt. Anstelle der im Beispiel 1 beschriebenen Klebelösungen werden Perbunan-Kleber verwendet bzw. in den angegebenen Klebelösungen Chloropren durch Perbunan-Kautschukmischungen ersetzt.

**Patentansprüche**

1. Ringförmiges Isolierstück für Verbindungsstellen zwischen Flanschen, insbesondere Rohrflanschen (1), dadurch gekennzeichnet, daß an der Verbindungsstelle, insbesondere der Stirnfläche (6) des Rohrflansches (1), eine Hartgummischicht (4), eine Weichgummischicht (2) sowie eine Hartgummizwischenlage (3) vorgesehen sind, wobei die Hartgummischicht (4) und die Weichgummischicht (2) radial gegeneinander versetzt sind und die Hartgummizwischenlage (3) einen doppelt abgewinkelten bzw. S-förmigen Querschnitt aufweist und im radial äußeren Bereich über der Hartgummischicht (4) und im radial inneren Bereich unter der Weichgummischicht (2) verläuft und mit beiden Schichten (2,4) verbunden ist.

2. Isolierstück nach Anspruch 1, dadurch gekennzeichnet, daß die Hartgummischicht (4) und die Weichgummischicht (2) einander teilweise überlappen.

3. Isolierstück nach Anspruch 1, dadurch gekennzeichnet, daß die Hartgummischicht (4) und der radial innere Teil der Hartgummizwischenlage (3) mit der Verbindungsstelle, insbesondere der Stirnfläche (6) des Rohrflansches (1), verbunden ist.

4. Isolierstück nach Anspruch 1, dadurch gekennzeichnet, daß die Hartgummischicht (4) und die Hartgummizwischenlage (3) ausvulkanisiert sind.

5. Isolierstück nach einem der vorhergehenden Ansprüche dadurch gekennzeichnet, daß die Weichgummischicht (2) durch den Flanschteil eines Schlauches (5) gebildet ist, welcher eine Rohrauskleidung bildet.

6. Verfahren zur Herstellung eines ringformigen Isolierstückes nach einem der vorhergehenden Ansprüche, dadurch gekennzeichnet, daß die Hartgummischicht (4) auf den Rohrflansch (1) aufgeklebt und mit schrägem Schurf versehen wird, daß danach die Hartgummizwischenlage (3) in unvulkanisiertem Zustand auf die Hartgummischicht (4) und den übrigen zu gummierenden Teil der Verbindungsstelle, insbesondere der Rohrstirnfläche (6), aufgeklebt wird, daß dann die Weichgummischicht (2) aus der Rohrauskleidung, insbesondere dem Schlauch (5), über die Schurfstelle gezogen und aufgeklebt wird, und daß schließlich die nicht vulkanisierten Gummiteile ausvulkanisiert werden.

## Claims

1. An annular insulating piece for junctions between flanges, in particular pipe flanges (1), characterized in that at the junction, in particular at the front surface (6) of the pipe flange (1), a hard-rubber layer (4), a soft-rubber layer (2) and a hard-rubber intermediate layer (3) are provided, the hard-rubber layer (4) and the soft-rubber layer (2) being radially offset and the hard-rubber intermediate layer (3) having a cross-section which has two bends or is S-shaped, in the radially outer region running over the hard-rubber layer (4) and in the radially inner region running under the soft-rubber layer (2) and being connected to both layers (2, 4).

2. A insulating piece in accordance with Claim 1, characterized in that the hard-rubber layer (4) and the soft-rubber layer (2) partially overlap one another.

3. An insulating piece in accordance with Claim 1, characterized in that the hard-rubber layer (4) and the radially inner part of the hard-rubber intermediate layer (3) is [sic.] connected to the junction, in particular to the front surface (6) of the pipe flange (1).

4. An insulating piece in accordance with Claim 1, characterized in that the hard-rubber layer (4) and the hard-rubber intermediate layer (3) are full cured.

5. An insulating piece in accordance with any one of the preceding Claims, characterized in that the soft-rubber layer (2) is formed by the flange part of a hose (5) which forms a pipe lining.

6. A process for producing an annular insulating piece in accordance with any one of the preceding Claims, characterized in that the hard-rubber layer (4) is glued onto the pipe flange (1) and is provided with an inclined shoulder*, in that subsequently the hard-rubber intermediate layer (3) is glued in the unvulcanized state onto the hard-rubber layer (4) and the remaining, designated for rubberization junction-area, in particular of the pipe front-surface (6), in that then the soft-rubber layer (2) is drawn from the pipe lining, in particular from the hose (5), and over the shoulder site and is glued on, and in that finally the non-vulcanized rubber-parts are full cured.

## Revendications

1. Raccord annulaire isolant pour des emplacements de jonction entre des brides, notamment de brides de canalisation (1), caractérisé en ce que sur l'emplacement de jonction, notamment la face frontale (6) de la bride de canalisation (1), on a prévu une couche en caoutchouc dur (4), une couche en caoutchouc mou (2) ainsi qu'une couche intermédiaire (3) en caoutchouc dur, la couche en caoutchouc dur (4) et la couche en caoutchouc mou (2) étant décalées radialement l'une par rapport à l'autre, et en ce que la couche intermédiaire (3) en caoutchouc dur présente une section transversale en forme de S à double coude, et s'étend dans la zone extérieure radiale au-dessus de la couche en caoutchouc dur (4) et dans la zone intérieure radiale sous la couche en caoutchouc mou (2), et en ce qu'elle est reliée aux deux couches (2, 4).

2. Raccord annulaire isolant suivant la revendication 1, caractérisé en ce que la couche en caoutchouc dur (4) et la couche en caoutchouc mou (2) se recouvrent partiellement.

3. Raccord annulaire isolant suivant la revendication 1, caractérisé en ce que la couche en caoutchouc dur (4) et la partie intérieure radiale de la couche intermédiaire (3) en caoutchouc dur sont reliées à l'emplacement de jonction notamment à la face frontale (6) de la bride de canalisation (1)

4. Raccord annulaire isolant suivant la revendication 1, caractérisé en ce que la couche en caoutchouc dur (4) et la couche intermédiaire (3) en caoutchouc dur sont vulcanisées.

5. Raccord annulaire isolant suivant l'une des revendications précédentes, caractérisé en ce que la couche en caoutchouc mou (2) est formée par la partie de bride d'une canalisation (5) qui constitue un revêtement de canalisation.

6. Procédé de fabrication d'un raccord annulaire isolant suivant l'une des revendications précédentes, caractérisé en ce que la couche en caoutchouc dur (4) est collée sur la bride de canalisation (1) et en ce qu'elle est chanfreinée, de sorte qu'ensuite la couche intermédiaire (3) en caoutchouc dur est collée dans l'état non vulcanisé sur la couche en caoutchouc dur (4) et sur la partie restante de l'emplacement de fonction qui doit encore être enduite de gomme, notamment de la face frontale de canalisation (6), en ce qu'ensuite la couche en caoutchouc mou (2) est tirée du revêtement de la canalisation, notamment de la canalisation (5), sur l'emplacement chanfreiné et collée sur celui-ci, et en ce qu'enfin les parties en caoutchouc non vulcanisées sont vulcanisées.